# EUROPEAN PATENT APPLICATION

(11) **EP 4 726 928 A1**
(43) Date of publication of application: **15.04.2026**
(21) Application number: 25206940.6
(22) Date of filing: 06.10.2025
(51) Int. Cl.: H01R 4/30, H01M 50/503, H02G 3/04, H01R 13/527, H01R 4/70

(54) **TERMINAL BLOCK STRUCTURE AND TERMINAL BLOCK**

(30) Priority: 09.10.2024 JP 2024177002
(71) Applicant: Yazaki Corporation, Tokyo 108-0075 (JP)
(72) Inventor: Kataoka, Masayuki, Makinohara-shi, Shizuoka, 421-0407 (JP); Kosho, Kozo, Makinohara-shi, Shizuoka, 421-0407 (JP); Ishida, Junya, Makinohara-shi, Shizuoka, 421-0407 (JP)
(74) Representative: Grünecker Patent- und Rechtsanwälte PartG mbB

(57) **Abstract**

A terminal block structure includes a first terminal block that is made of a box-shaped insulating resin and accommodates a conductive first terminal; a second terminal block that is made of a box-shaped insulating resin, accommodates a conductive second terminal, and is stacked on the first terminal block; a conducting portion that is held by the second terminal block, is provided between the first terminal and the second terminal, and electrically connects the first terminal and the second terminal; and a coupling portion that presses the first terminal and the second terminal toward the conducting portion and brings the first terminal and the second terminal into contact with the conducting portion. At least one of the first terminal block and the second terminal block has a fire-resistant insulating tape attached to a box inner face thereof.

## Description

### TECHNICAL FIELD

The present invention relates to a terminal block structure and a terminal block.

### BACKGROUND ART

One of problems of popularization of electric vehicles is reduction of risk of vehicle fire. For example, due to thermal runaway of a cell (single cell) included in a battery pack, deformation of the cell due to an impact in a vehicle collision accident, or the like, when the cell emits smoke (burns), carbonizes surrounding insulating members, and short-circuits with the surrounding members, the thermal runaway of the cell may cause a chain reaction to increase the risk of vehicle fire. As a measure widely used for reducing the risk of such vehicle fire, there is a method of disposing a member (fire-resistant insulating member) capable of ensuring an insulating function even at a high temperature on a surface of a high voltage path, so as to prevent a short circuit due to carbonization of a member in the high voltage path in a battery pack when a cell emits smoke. However, the fire-resistant insulating member needs to withstand a high temperature, and therefore is made of an inorganic material such as glass or mica, and is difficult to be processed into a complicated product shape. A terminal block for fixing a terminal of a conducting member may also be short-circuited by carbonization when a cell emits smoke. Therefore, there is a structure in which the terminal block is made of a flame-retardant resin to prevent the resin from being carbonized at a high temperature, thereby preventing a short circuit in the terminal block (Patent Literature 1).

### CITATION LIST

### PATENT LITERATURE

Patent Literature 1: JP2019-185892A

### SUMMARY OF INVENTION

### TECHNICAL PROBLEM

However, since the flame-retardant resin as described in Patent Literature 1 contains an inorganic material, there are problems that the cost thereof is higher than that of a resin that is not flame-retardant, moldability thereof is poor, and it is difficult to obtain a complicated product shape because of a hard and brittle physical property thereof as compared with a resin that is not flame-retardant.

The present invention has been made to solve such problems, and an object thereof is to provide a terminal block structure and a terminal block capable of maintaining insulation even when a material that is easily carbonized at a high temperature is used.

The present invention has been made to solve such problems, and an object of the present invention is to provide a terminal block structure and a terminal block capable of maintaining insulation even when a material that is easily carbonized at a high temperature is used.

### SOLUTION TO PROBLEM

The terminal block structure of the present invention includes a first terminal block that is made of a box-shaped insulating resin and accommodates a conductive first terminal; a second terminal block that is made of a box-shaped insulating resin, accommodates a conductive second terminal, and is stacked on the first terminal block; a conducting portion that is held by the second terminal block, is provided between the first terminal and the second terminal, and electrically connects the first terminal and the second terminal; and a coupling portion that presses the first terminal and the second terminal toward the conducting portion and brings the first terminal and the second terminal into contact with the conducting portion. At least one of the first terminal block and the second terminal block has a fire-resistant insulating tape attached to a box inner face thereof.

### ADVANTAGEOUS EFFECTS OF INVENTION

The present invention can provide a terminal block structure and a terminal block capable of maintaining insulation even when a material that is easily carbonized at a high temperature is used.

### BRIEF DESCRIPTION OF DRAWINGS

FIG. 1 is a plan view illustrating a structure of a battery provided with a terminal block structure including a terminal block according to the present embodiment;
FIG. 2 is a perspective view of the terminal block structure illustrated in FIG. 1, in which a hatched part illustrates a cross section;
FIG. 3 is a perspective view of the terminal block structure illustrated in FIG. 1 as viewed from an angle different from that in FIG. 2, in which a hatched part illustrates a cross section;
FIG. 4 is a cross-sectional view taken along a line A-A in FIG. 2;
FIG. 5 is an exploded perspective view of FIG. 2, in which illustration of a fire-resistant insulating tape is omitted;
FIG. 6 is a cross-sectional view illustrating only a first terminal block and members held by the first terminal block in FIG. 4;
FIG. 7 is a cross-sectional view illustrating only a second terminal block and members held by the second terminal block in FIG. 4; and
FIG. 8 is a plan view illustrating a modification of the structure of the battery provided with the terminal block structure including the terminal block according to the present embodiment.

### DESCRIPTION OF EMBODIMENTS

Hereinafter, the present invention will be described with reference to a preferred embodiment. The present invention is not limited to the embodiments to be described below, and the embodiments can be appropriately changed without departing from the gist of the present invention. In the embodiment to be described below, there may be parts in which illustration and description of a part of a configuration are omitted, and it is needless to say that a public or well-known technique is appropriately applied to details of an omitted technique within a range in which no contradiction with contents to be described below would occur.

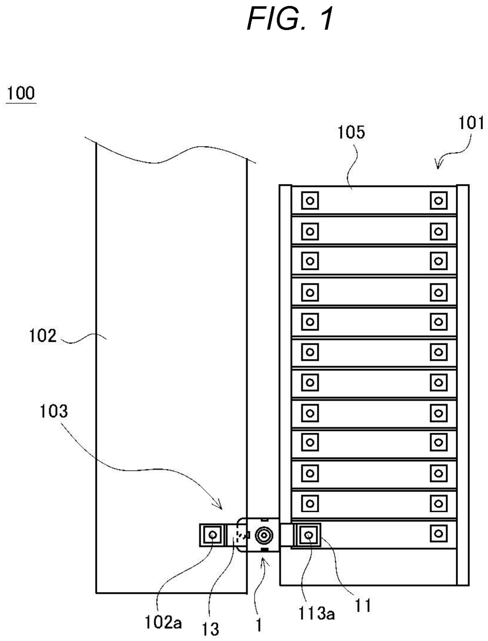

First, a structure of a battery provided with a terminal block structure including a terminal block according to the present embodiment will be described with reference to FIG. 1. FIG. 1 is a plan view illustrating the structure of the battery provided with the terminal block structure including the terminal block according to the present embodiment. A battery 100 illustrated in FIG. 1 is, for example, a power supply for an electric vehicle, and includes a battery pack 101, a junction box 102, and a connecting portion 103.

The battery pack 101 is a container that accommodates a storage battery, and accommodates a plurality of single cells 105, also called cells, in a state of being connected to each other. The junction box 102 is a terminal box in which wirings in the battery 100 are collected and distributed to input and output terminals, and accommodates a relay, a fuse, and the like (not illustrated) therein. The connecting portion 103 is a portion that connects an output terminal 113a of the battery pack 101 and an input terminal 102a of the junction box 102. The connecting portion 103 includes a first terminal 11 (terminal), a second terminal 13 (terminal), and a terminal block structure 1. The first terminal 11 is a conductive live part such as a busbar connected to the output terminal 113a of the battery pack 101. The second terminal 13 is a conductive live part such as a busbar connected to the input terminal 102a of the junction box 102. The terminal block structure 1 is a member that electrically connects the first terminal 11 and the second terminal 13. The structure of the battery 100 has been described above.

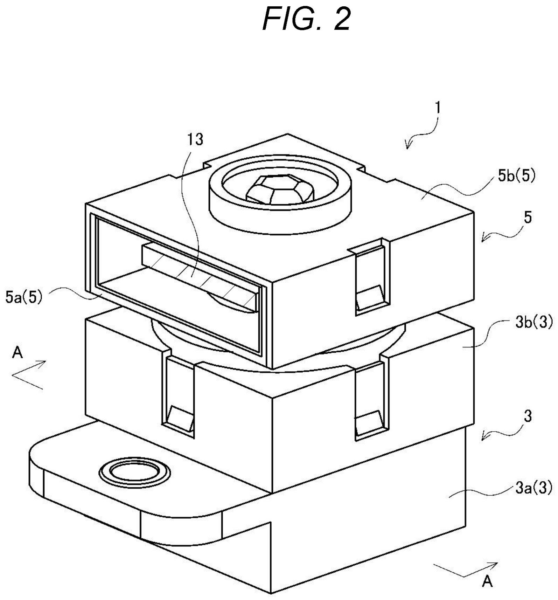

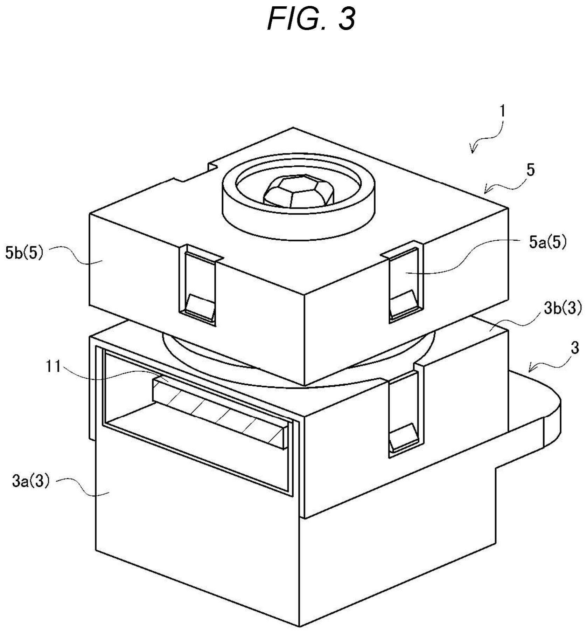

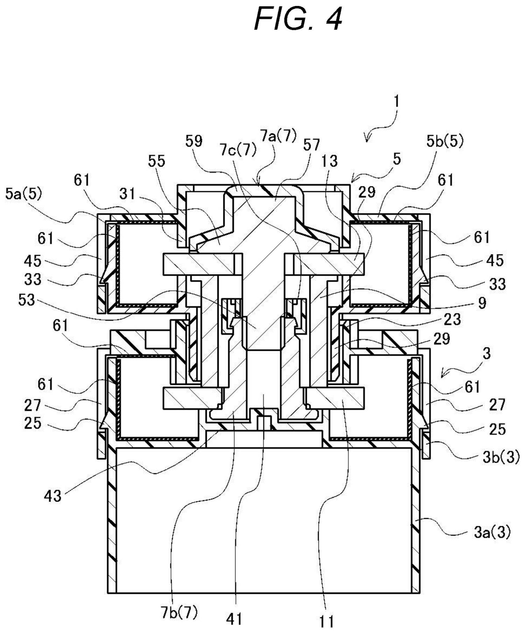

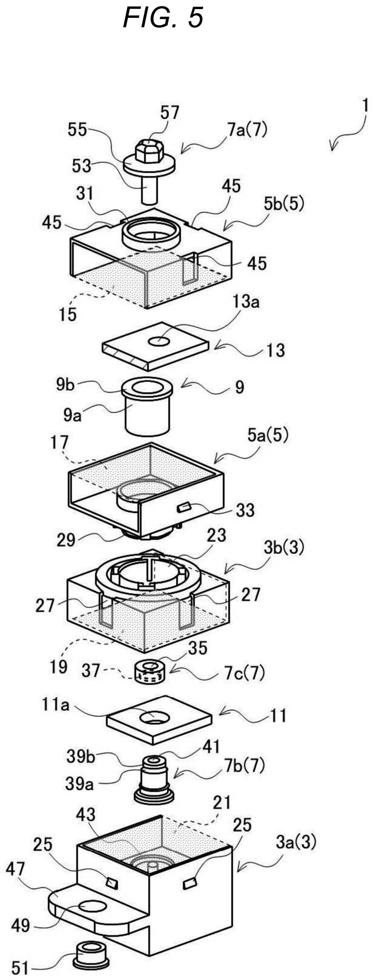

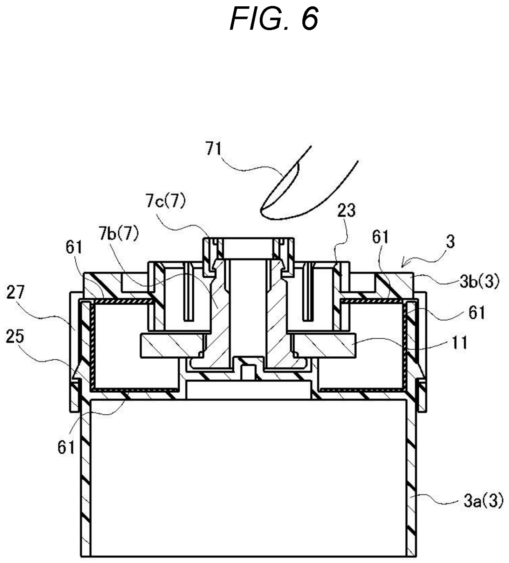

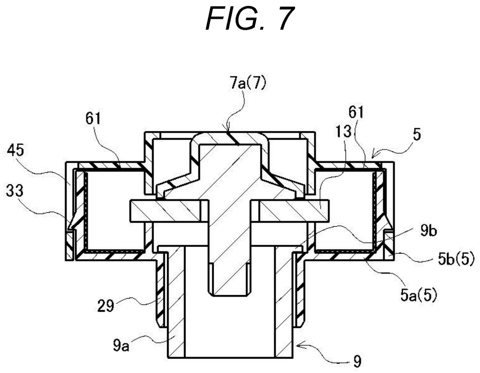

Next, a configuration of the terminal block structure 1 will be described with reference to FIGS. 2 to 7. FIG. 2 is a perspective view of the terminal block structure 1 illustrated in FIG. 1, in which a hatched part illustrates a cross section. FIG. 3 is a perspective view of the terminal block structure 1 illustrated in FIG. 1 as viewed from an angle different from that in FIG. 2, in which a hatched part illustrates a cross section. FIG. 4 is a cross-sectional view taken along a line A-A in Fig. 2. FIG. 5 is an exploded perspective view of FIG. 2, in which illustration of a fire-resistant insulating tape is omitted. FIG. 6 is a cross-sectional view illustrating only a first terminal block and members held by the first terminal block in FIG. 4. FIG. 7 is a cross-sectional view illustrating only a second terminal block and members held by the second terminal block in FIG. 4.

As illustrated in FIGS. 2 and 3, the terminal block structure 1 includes a first terminal block 3 (terminal block) and a second terminal block 5 (terminal block), and the second terminal block 5 is stacked on the first terminal block 3. As illustrated in FIGS. 4 and 5, the terminal block structure 1 also includes a coupling portion 7 and a conducting portion 9.

The first terminal block 3 here is made of a box-shaped rectangular parallelepiped insulating resin having a flat inner face, and accommodates the first terminal 11, and includes a first inner case 3a (inner case) and a first outer case 3b (outer case). As illustrated in FIG. 5, the first inner case 3a is made of a box-shaped insulating resin having an opened upper face 21 (open face). One of side faces of the first inner case 3a is also opened to draw the first terminal 11 to the outside. A plate-shaped protruding portion 47 is provided on one of outer side faces of the first inner case 3a. The protruding portion 47 is a portion for fixing the first terminal block 3 to another device such as the junction box 102 (see FIG. 1), and a thickness direction is oriented in an upper-lower direction. A through hole 49 penetrating in the thickness direction is formed in the protruding portion 47. A cylindrical sleeve 51 is fitted into the through hole 49, and the first terminal block 3 can be fixed to the junction box 102 by screwing a screw or the like (not illustrated) to the junction box 102 through the sleeve 51.

The first inner case 3a includes claws 25 provided in a manner of protruding from three outer side faces (only two are illustrated in FIG. 5), respectively. Each of the claws 25 is a wedge-shaped portion, and has a shape in which a wedge tip thereof faces upward and a thickness in a protruding direction thereof decreases from a lower side to an upper side. A cylindrical accommodating portion 43 for accommodating the coupling portion 7 is provided on an inner bottom face of the first inner case 3a.

The first outer case 3b is made of a box-shaped insulating resin having an opened lower face 19, and covers the first inner case 3a from the outside so as to close the upper face 21 of the first inner case 3a. One of side faces of the first outer case 3b is also opened to draw the first terminal 11 to the outside, and the opened side face overlaps the opened side face of the first inner case 3a. The first outer case 3b includes holes 27 (engaging portions) penetrating three side faces (only two are illustrated in FIG. 5) in the thickness direction. Each of the holes 27 is a hole having a rectangular planar shape, and fixes the first outer case 3b to the first inner case 3a by engaging with the claw 25. The first outer case 3b is provided with a first tubular portion 23 (opening) on an upper face thereof that is a face overlapping the second terminal block 5. The first tubular portion 23 is an opening whose upper end and lower end are opened.

As illustrated in FIGS. 4 and 6, in a state in which the first outer case 3b is fixed to the first inner case 3a, a fire-resistant insulating tape 61 is attached to an inner face of the first terminal block 3. The fire-resistant insulating tape 61 is a tape having an insulating layer made of a flame-retardant inorganic material such as glass or mica, is a tape that can be bent to approximately 90°, and is attached by, for example, a worker manually when manufacturing the terminal block structure 1.

In this configuration, even when the insulating resin constituting the first terminal block 3 is heated and carbonized and then loses the insulation due to thermal runaway of the battery pack 101, deformation of the single cells 105 due to a vehicle collision accident, or the like, the fire-resistant insulating tape 61 maintains the insulation of the first terminal block 3. Therefore, even when the first terminal block 3 is made of a material that is easily carbonized at a high temperature, the insulation of the first terminal block 3 can be maintained.

With this configuration, the first outer case 3b covers the first inner case 3a, and the claws 25 provided on the outside of the first inner case 3a engage with the holes 27 of the first outer case 3b. As a result, the first outer case 3b is fixed to the first inner case 3a to form the first terminal block 3. In this configuration, since the claws 25 and the holes 27 for fixing the first outer case 3b to the first inner case 3a are provided on faces facing each other in a state in which the first inner case 3a is covered by the first outer case 3b, the claws 25 and the holes 27 are not disposed on the box inner face. Therefore, the box inner face can be made flat, and the fire-resistant insulating tape 61 can be easily attached to the box inner face.

The second terminal block 5 here is made of a box-shaped rectangular parallelepiped insulating resin having a flat inner face, accommodates the second terminal 13, and is stacked on the first terminal block 3 in FIGS. 2 and 3. The second terminal block 5 includes a second inner case 5a (inner case) and a second outer case 5b (outer case). As illustrated in FIG. 5, the second inner case 5a is made of a box-shaped insulating resin having an opened upper face 17 (open face). One of side faces of the second inner case 5a is also opened to draw the second terminal 13 to the outside.

The second inner case 5a includes claws 33 provided in a manner of protruding from three outer side faces (only one is illustrated in FIG. 5), respectively. Similar to the claw 25, each of the claws 33 is a wedge-shaped portion, and has a shape in which a wedge tip thereof faces upward and a thickness in a protruding direction thereof decreases from a lower side to an upper side. A second tubular portion 29 is provided on a bottom face of the second inner case 5a. The second tubular portion 29 is a tubular member with both ends opened, and an outer diameter of a portion thereof protruding from the bottom face of the second inner case 5a is smaller than an outer diameter of the first tubular portion 23. The second tubular portion 29 is a portion to be inserted into the first tubular portion 23 when the second terminal block 5 is stacked on the first terminal block 3.

The second outer case 5b is made of a box-shaped insulating resin having an opened lower face 15, and covers the second inner case 5a from the outside so as to close the upper face 17 of the second inner case 5a. One of side faces of the second outer case 5b is also opened to draw the second terminal 13 to the outside, and the opened side face overlaps the opened side face of the second inner case 5a. The second outer case 5b includes holes 45 (engaging portions) penetrating three side faces in the thickness direction. Similar to the hole 27, each of the holes 45 is a hole having a rectangular planar shape, and fixes the second outer case 5b to the second inner case 5a by engaging with the claw 33. A third tubular portion 31 for holding the coupling portion 7 is provided on an outer upper face of the second outer case 5b. An upper end and a lower end of the third tubular portion 31 are opened.

As illustrated in FIGS. 4 and 7, in a state in which the second outer case 5b is fixed to the second inner case 5a, the fire-resistant insulating tape 61 is attached to an inner face of the second terminal block 5.

In this configuration, even when the insulating resin constituting the second terminal block 5 is heated and carbonized and then loses the insulation due to thermal runaway of the battery pack 101, deformation of the single cells 105 due to a vehicle collision accident, or the like, the fire-resistant insulating tape 61 maintains the insulation of the second terminal block 5. Therefore, even when the second terminal block 5 is made of a material that is easily carbonized at a high temperature, the insulation of the second terminal block 5 can be maintained.

In this configuration, the second outer case 5b covers the second inner case 5a, and the claws 33 provided on the outside of the second inner case 5a engage with the holes 45 of the second outer case 5b. As a result, the second outer case 5b is fixed to the second inner case 5a to form the second terminal block 5. In this configuration, since the claws 33 and the holes 45 for fixing the second outer case 5b to the second inner case 5a are provided on faces facing each other in a state in which the second inner case 5a is covered by the second outer case 5b, the claws 33 and the holes 45 are not disposed on the box inner face. Therefore, the box inner face can be made flat, and the fire-resistant insulating tape 61 can be easily attached to the box inner face.

Note that although FIG. 4 illustrates a structure in which the fire-resistant insulating tape 61 is attached to both the first terminal block 3 and the second terminal block 5, the fire-resistant insulating tape 61 may be attached to at least one of the first terminal block 3 and the second terminal block 5. In this case, whether the fire-resistant insulating tape 61 is attached to the first terminal block 3 or the second terminal block 5 may be appropriately selected in consideration of various of advantages.

For example, the first terminal block 3 accommodates the first terminal 11, but as illustrated in FIG. 1, the first terminal 11 is directly coupled to the battery pack 101 and is positioned upstream of the second terminal 13 in a voltage path. Therefore, when an operation abnormality such as thermal runaway occurs in a state in which the battery pack 101 is left to stand, a temperature of the first terminal 11 becomes higher than that of the second terminal 13. Therefore, when an operation abnormality occurs in the battery pack 101, the first terminal block 3 is more easily carbonized than the second terminal block 5. Therefore, when the fire-resistant insulating tape 61 is attached to the first terminal block 3, it is advantageous in that the insulation can be maintained when the first terminal block 3 emits smoke and is carbonized due to an operation abnormality in a state in which the battery pack 101 is left to stand.

On the other hand, the second terminal block 5 is stacked on the first terminal block 3, and absorbs an impact and is deformed earlier than the first terminal block 3 due to a collision accident of the vehicle on which the battery pack 101 is mounted, so that smoke is easily generated due to a short circuit caused by deformation. Therefore, when the fire-resistant insulating tape 61 is attached to the second terminal block 5, it is advantageous in that the insulation can be maintained when the second terminal block 5 emits smoke and is carbonized due to a collision of the vehicle on which the battery pack 101 is mounted.

Note that in the case where the fire-resistant insulating tape 61 is provided on the first terminal block 3, the fire-resistant insulating tape 61 may have such a thickness that the insulation can be maintained when the first terminal block 3 is carbonized. When the fire-resistant insulating tape 61 is provided on the second terminal block 5, the fire-resistant insulating tape 61 may have such a thickness that the insulation can be maintained when the second terminal block 5 is carbonized.

The conducting portion 9 illustrated in FIGS. 4 and 5 is a conducting member such as copper that electrically connects the first terminal 11 and the second terminal 13, and is held by the second terminal block 5. As illustrated in FIGS. 5 and 7, the conducting portion 9 includes a tubular portion 9a and a flange portion 9b. The tubular portion 9a is a conductive tubular body and has an outer diameter smaller than the inner diameter of the second tubular portion 29. The flange portion 9b is an annular portion provided around an outer periphery of an upper end of the tubular portion 9a, and an outer diameter thereof is larger than an inner diameter of the portion of the second tubular portion 29 protruding from the bottom face of the second inner case 5a. The conducting portion 9 is provided between the first terminal 11 and the second terminal 13, and electrically connects the first terminal 11 and the second terminal 13 by being sandwiched between the first terminal 11 and the second terminal 13.

As illustrated in FIG. 7, the conducting portion 9 is inserted into the second tubular portion 29 such that the flange portion 9b is disposed inside the second terminal block 5 and is positioned below the first terminal 11. In this state, even when the conducting portion 9 is to move toward the lower side, the flange portion 9b comes into contact with the bottom face of the second inner case 5a since the outer diameter of the flange portion 9b is larger than the inner diameter of the portion of the second tubular portion 29 protruding from the bottom face of the second inner case 5a. Therefore, the flange portion 9b is restricted from moving toward the lower side by the bottom face of the second inner case 5a and is held by the second terminal block 5. As illustrated in FIG. 4, the conducting portion 9 is sandwiched between the first terminal 11 and the second terminal 13 and electrically connects the first terminal 11 and the second terminal 13 by inserting a lower end thereof into the first tubular portion 23 of the first terminal block 3 and bringing the lower end into contact with the first terminal 11 in a state in which an upper end thereof is in contact with the second terminal 13.

The coupling portion 7 is a member that electrically connects the first terminal 11 and the second terminal 13 and couples the first terminal block 3 and the second terminal block 5, and includes a nut 7b (coupling portion), a bolt 7a (coupling portion), and an insulating convex portion 7c (coupling portion). The nut 7b is a conductive member made of steel or the like having a cylindrical shape and having a female screw cut on an inner periphery 41 thereof, penetrates the through hole 11a of the first terminal 11 illustrated in FIG. 5 with an axial direction toward an upper side, is accommodated in the accommodating portion 43 of the first inner case 3a, and has a tip exposed from the first tubular portion 23. A ring groove 39a formed along a circumferential direction is provided on an outer periphery near a tip (upper end) of the nut 7b, and a portion above the ring groove 39a constitutes a flange-shaped annular portion 39b. Note that an outer diameter of the nut 7b is smaller than an inner diameter of the tubular portion 9a of the conducting portion 9.

The bolt 7a is a conductive member made of steel or the like that electrically connects the first terminal 11 and the second terminal 13 and further couples the first terminal block 3 and the second terminal block 5 by being screwed with the nut 7b. As illustrated in FIG. 4, the bolt 7a includes a screw bar 53, a bolt head 57, a washer 55, and an insulating sheath 59. The screw bar 53 is a round bar having a male screw cut on an outer periphery thereof for screwing with the female screw of the inner periphery 41 of the nut 7b. The bolt head 57 is a portion that engages with a tool that rotates the bolt 7a when the screw bar 53 is screwed with the female screw of the inner periphery 41 of the nut 7b, and is a hexagonal column provided at an upper end of the screw bar 53. The washer 55 is a flange-shaped member for increasing a seat area of the bolt 7a, and is provided between the screw bar 53 and the bolt head 57. The insulating sheath 59 is a sheath for preventing electric leakage via the bolt 7a, and is provided to cover the bolt head 57 and an upper face and a side face of the washer 55.

A procedure of electrically connecting the first terminal 11 and the second terminal 13 and coupling the first terminal block 3 and the second terminal block 5 to each other using the bolt 7a and the nut 7b is as follows. First, the first terminal block 3 is assembled. Specifically, first, in a state in which the first inner case 3a and the first outer case 3b are separated from each other, the nut 7b is accommodated in the accommodating portion 43 of the first inner case 3a illustrated in FIG. 5, and the nut 7b is caused to penetrate the through hole 13a of the second terminal 13 from the lower side to come into contact with the first terminal 11. Next, the insulating convex portion 7c, which will be described below, is engaged with the tip of the nut 7b.

Further, the first terminal block 3 is assembled by fixing the first outer case 3b to the first inner case 3a. Specifically, the first inner case 3a is covered with the first outer case 3b from above, and the inner face of the first outer case 3b is pressed against the claws 25 of the first inner case 3a. Accordingly, the claws 25 are pushed to come into contact with the inner face of the first outer case 3b, and the first outer case 3b covers the first inner case 3a while the side faces of the first inner case 3a are elastically deformed inward or the side faces of the first outer case 3b are elastically deformed outward. Further, when the first inner case 3a is covered with the first outer case 3b until the claws 25 reach positions overlapping the holes 27, the claws 25 are not in contact with the inner face of the first outer case 3b, and thus the elastically deformed first inner case 3a or first outer case 3b returns to the original shape. In this state, the claws 25 and the holes 27 are engaged with each other, and therefore the first outer case 3b is fixed to the first inner case 3a.

Next, the second terminal block 5 is assembled. Specifically, first, in a state in which the second inner case 5a and the second outer case 5b are separated from each other, the conducting portion 9 is inserted into the second tubular portion 29 of the second inner case 5a with the flange portion 9b facing the upper side. Further, the second terminal 13 is inserted into the second inner case 5a and placed on the upper end of the second tubular portion 29, so that the second terminal 13 is disposed above the flange portion 9b.

Next, the second outer case 5b is fixed to the second inner case 5a. Specifically, the second inner case 5a is covered with the second outer case 5b from above, and the inner face of the second outer case 5b is pressed against the claws 33 of the second inner case 5a. Accordingly, the claws 33 are pushed to come into contact with the inner face of the second outer case 5b, and the second outer case 5b covers the second inner case 5a while the side faces of the second inner case 5a are elastically deformed inward or the side faces of the second outer case 5b are elastically deformed outward. Further, when the second inner case 5a is covered with the second outer case 5b until the claws 33 reach positions overlapping the holes 45, the claws 33 are not in contact with the inner face of the second outer case 5b, and thus the elastically deformed second inner case 5a or second outer case 5b returns to the original shape. In this state, the claws 33 and the holes 45 are engaged with each other, and therefore the second outer case 5b is fixed to the second inner case 5a.

Further, the second terminal block 5 is assembled by inserting the bolt 7a into the third tubular portion 31 with the screw bar 53 facing the lower side and causing the screw bar 53 to penetrate through the through hole 13a of the second terminal 13 and the conducting portion 9. Note that the screw bar 53 of the bolt 7a may be caused to penetrate through the through hole 13a and the conducting portion 9 before the second outer case 5b is fixed to the second inner case 5a.

Next, the first terminal 11 and the second terminal 13 are pressed toward the conducting portion 9 and brought into contact with the conducting portion 9 in a manner of sandwiching the conducting portion 9 by screwing and tightening the screw bar 53 of the bolt 7a with the female screw of the inner periphery 41 of the nut 7b, and the first terminal 11 and the second terminal 13 are electrically connected. This state is illustrated in FIG. 4. When the first terminal block 3 and the second terminal block 5 are to be separated from each other in the state illustrated in FIG. 4, the first terminal 11 comes into contact with the lower end of the first tubular portion 23, and the second terminal 13 comes into contact with the upper end of the second tubular portion 29, and thus the separation is inhibited. Therefore, by screwing and tightening the bolt 7a to the nut 7b, the first terminal 11 and the second terminal 13 are electrically connected, and the first terminal block 3 and the second terminal block 5 are coupled to each other. Note that in this state, even when the first terminal 11 and the second terminal 13 are to be drawn out from the faces opened among the side faces of the first terminal block 3 and the second terminal block 5, movement is prevented by the nut 7b and the bolt 7a. The first terminal 11 is also electrically connected to the bolt 7a, and the insulating sheath 59 is provided on the bolt head 57 and the washer 55. Therefore, even when a worker such as a mechanic of an electric vehicle accidentally touches the bolt head 57 or the washer 55 in a state in which the first terminal 11 is energized, the worker and the bolt head 57 or the washer 55 are insulated from each other by the insulating sheath 59, and thus it is possible to prevent the worker from getting an electric shock.

The insulating convex portion 7c illustrated in FIGS. 4 and 5 is a member for preventing electric leakage via the nut 7b, and is an insulator made of a tubular resin or the like that covers the tip of the nut 7b and engages with the nut 7b. More specifically, a diameter of an inner periphery 35 of the insulating convex portion 7c illustrated in FIG. 5 is smaller than an outer diameter of the annular portion 39b at the tip of the nut 7b. On the other hand, a ring groove 37 formed along a circumferential direction is provided on the inner periphery 35 of the insulating convex portion 7c. An inner diameter of the ring groove 37 is larger than the outer diameter of the annular portion 39b. With this configuration, by press-fitting the annular portion 39b of the nut 7b into the inner periphery 35 of the insulating convex portion 7c and engaging the annular portion 39b with the ring groove 37, the insulating convex portion 7c can be engaged with the tip of the nut 7b. In this state, the nut 7b is accommodated in the accommodating portion 43 of the first inner case 3a of the first terminal block 3 and passes through the through hole 11a of the first terminal 11, and the first inner case 3a is covered with the first outer case 3b, so that the first terminal block 3 is assembled as illustrated in FIG. 6.

For example, when the battery 100 is assembled or removed, as illustrated in FIG. 6, the first terminal block 3 may be separated from the second terminal block 5. In this state, the tip of the nut 7b is exposed from the first tubular portion 23. When the first terminal 11 is electrically connected to the battery pack 101 (see FIG. 1), the nut 7b is also electrically connected to the battery pack 101 since the nut 7b is electrically connected to the first terminal 11. However, since the insulating convex portion 7c of the first terminal block 3 is fixed to the tip of the nut 7b, when the worker brings his or her finger 71 close to the nut 7b, the finger 71 comes into contact with the insulating convex portion 7c before the nut 7b. In this state, since the nut 7b and the finger 71 are insulated from each other by the insulating convex portion 7c, it is possible to prevent the worker from getting an electric shock even when accidentally touching the nut 7b in a state in which the first terminal block 3 and the second terminal block 5 are separated from each other and the nut 7b is exposed. In addition, it is also possible to prevent other conducting members from accidentally coming into contact with the nut 7b to result in a short circuit when the battery 100 is assembled. Note that since the diameter of the inner periphery 35 of the insulating convex portion 7c illustrated in FIG. 5 is larger than a screw diameter of the screw bar 53 of the bolt 7a, the screw bar 53 can be inserted into the inner periphery 35 of the insulating convex portion 7c when the bolt 7a is screwed with the nut 7b. Therefore, the insulating convex portion 7c does not hinder the screwing. The configuration of the terminal block structure 1 has been described above.

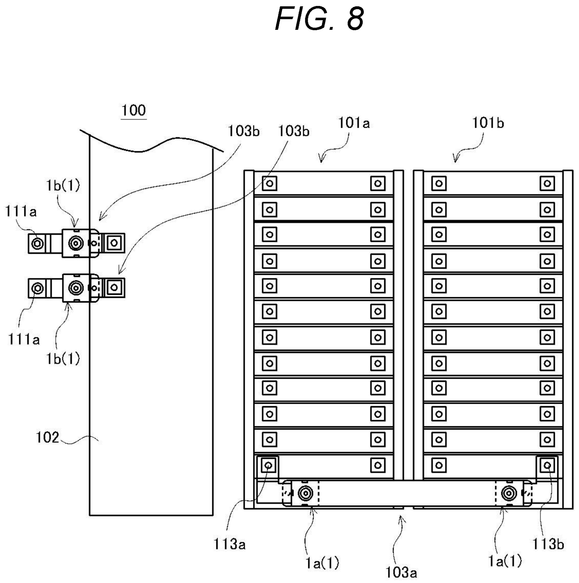

Next, a modification of the terminal block structure according to the present embodiment will be briefly described. FIG. 8 is a plan view illustrating a modification of the structure of the battery provided with the terminal block structure including the terminal block according to the present embodiment.

The terminal block structure 1 can be applied not only to the connecting portion 103 that connects the battery pack 101 and the junction box 102, but also to other connecting portions that need to be electrically connected via a terminal block. For example, a terminal block structure 1a illustrated in FIG. 8 is applied to a connecting portion 103a that electrically connects an output terminal 113a of a battery pack 101a and an input terminal 113b of a battery pack 101b. A terminal block structure 1b is applied to a connecting portion 103b that connects the junction box 102 and an external terminal 111a of an external device. The modification of the terminal block structure 1 has been described above.

As described above, the terminal block structures 1, 1a, and 1b of the present embodiment include the first terminal block 3, the second terminal block 5, the conducting portion 9, and the coupling portion 7, and at least one of the first terminal block 3 and the second terminal block 5 has the fire-resistant insulating tape 61 attached to the box inner face thereof. With this configuration, when the insulating resin constituting the first terminal block 3 or the second terminal block 5 is carbonized by heating and loses the insulation, the fire-resistant insulating tape 61 maintains the insulation. Therefore, even when the first terminal block 3 or the second terminal block 5 is made of a material that is easily carbonized at a high temperature, the insulation of the first terminal block 3 or the second terminal block 5 can be maintained.

In the terminal block structures 1, 1a and 1b of the present embodiment, the first terminal block 3 to which the fire-resistant insulating tape 61 is attached includes the first inner case 3a, the first outer case 3b, the claws 25 provided on the outer side faces of the first inner case 3a, and the holes 27 provided on the first outer case 3b. With this configuration, since the claws 25 and the holes 27 for fixing the first outer case 3b to the first inner case 3a are not disposed on the box inner face of the first terminal block 3, the inner face can be made flat, and the fire-resistant insulating tape 61 can be easily attached.

Further, in the terminal block structures 1, 1a and 1b of the present embodiment, the second terminal block 5 to which the fire-resistant insulating tape 61 is attached includes the second inner case 5a, the second outer case 5b, the claws 33 provided on the outer side faces of the second inner case 5a, and the holes 45 provided on the second outer case 5b. With this configuration, since the claws 33 and the holes 45 for fixing the second outer case 5b to the second inner case 5a are not disposed on the box inner face of the second terminal block 5, the inner face can be made flat, and the fire-resistant insulating tape 61 can be easily attached.

Further, the first terminal block 3 of the terminal block structures 1, 1a and 1b of the present embodiment has the first tubular portion 23, and the coupling portion 7 includes the conductive nut 7b having the tip exposed from the first tubular portion 23, the bolt 7a accommodated in the first terminal block 3 and screwed with the nut 7b, and the insulating convex portion 7c covering the tip of the nut 7b. With this configuration, when the worker brings the finger 71 close to the nut 7b in a state in which the first terminal block 3 and the second terminal block 5 are separated from each other, the finger 71 comes into contact with the insulating convex portion 7c before the nut 7b. Therefore, it is possible to prevent the worker from getting an electric shock even when accidentally touching the nut 7b in a state in which the first terminal block 3 and the second terminal block 5 are separated from each other and the nut 7b is exposed.

Although the present invention has been described above based on an embodiment, the present invention is not limited to the above embodiment, and modifications may be made without departing from the gist of the present invention and other techniques may be appropriately combined if possible. Further, public or well-known techniques may be combined if possible.

For example, in the above-described embodiment, the claws 25 are provided on the outer side faces of the first inner case 3a of the first terminal block 3, and the claws 33 are provided on the outer side faces of the second inner case 5a of the second terminal block 5, thereby flattening the box inner face. However, the box inner face may be made flat of only the first terminal block 3 or the second terminal block 5 to which the fire-resistant insulating tape 61 is attached.

In the above-described embodiment, the holes 27 and 45 are exemplified as the engaging portions that engage with the claws 25 and 33, but the engaging portions are not limited to the holes 27 and 45 as long as the engaging portions have a structure that engages with the claws 25 and 33, and may be, for example, concave portions.

### REFERENCE SIGNS LIST

- 1, 1a, 1b: : terminal block structure
- 3: : first terminal block (terminal block)
- 3a: : first inner case (inner case)
- 3b: : first outer case (outer case)
- 5: : second terminal block (terminal block)
- 5a: : second inner case (inner case)
- 5b: : second outer case (outer case)
- 7: : coupling portion
- 7a: : bolt (coupling portion)
- 7b: : nut (coupling portion)
- 7c: : insulating convex portion (coupling portion)
- 9: : conducting portion
- 11: :first terminal (terminal)
- 13: : second terminal (terminal)
- 17: : upper face (open face)
- 21: : upper face (open face)
- 23: : first tubular portion (opening)
- 25: : claw
- 27: : hole (engaging portion)
- 33: : claw
- 45: : hole (engaging portion)
- 61: : fire-resistant insulating tape

## Claims

1. A terminal block structure, comprising:
a first terminal block that is made of a box-shaped insulating resin and accommodates a conductive first terminal;
a second terminal block that is made of a box-shaped insulating resin, accommodates a conductive second terminal, and is stacked on the first terminal block;
a conducting portion that is held by the second terminal block, is provided between the first terminal and the second terminal, and electrically connects the first terminal and the second terminal; and
a coupling portion that presses the first terminal and the second terminal toward the conducting portion and brings the first terminal and the second terminal into contact with the conducting portion, wherein
at least one of the first terminal block and the second terminal block has a fire-resistant insulating tape attached to a box inner face thereof.

2. The terminal block structure according to claim 1, wherein
one of the first terminal block and the second terminal block to which the fire-resistant insulating tape is attached includes
a box-shaped inner case with one face opened as an open face,
a box-shaped outer case that covers the inner case from outside so as to close the open face,
a claw provided on an outer side face of the inner case, and
an engaging portion that is provided on the outer case and engages with the claw to fix the outer case to the inner case.

3. The terminal block structure according to claim 1, wherein
the first terminal block has an opening in a face overlapping the second terminal block, and
the coupling portion includes
a conductive nut that penetrates the first terminal, is accommodated in the first terminal block, and has a tip exposed from the opening,
a bolt that penetrates the second terminal and the conducting portion, is accommodated in the first terminal block, and is screwed with the nut, and
an insulating convex portion that is a tubular insulator covering the tip of the nut and engaging with the nut.

4. A terminal block that is made of a box-shaped insulating resin and accommodates a conductive terminal, wherein
a fire-resistant insulating tape is attached to a box inner face thereof.
